# EUROPÄISCHE PATENTSCHRIFT

(11) **EP 1 988 846 B1**
(45) Veröffentlichungstag und Bekanntmachung des Hinweises auf die Patenterteilung: **21.12.2011**
(21) Anmeldenummer: 07704664.7
(22) Anmeldetag: 21.02.2007
(51) Int. Cl.: A61C 17/00, A61C 19/00, A61C 1/00

(54) **ZAHNÄRZTLICHE SPÜLEINHEIT**
DENTAL RINSING UNIT
UNITÉ DE RINÇAGE DENTAIRE

(30) Priorität: 23.02.2006 DE 102006008944
(43) Veröffentlichungstag der Anmeldung: 12.11.2008
(73) Patentinhaber: Sirona Dental Systems GmbH, 64625 Bensheim (DE)
(72) Erfinder: FREY, Hans-Peter, 67227 Frankenthal (DE)
(74) Vertreter: Sommer, Peter
(86) Internationale Anmeldenummer: PCT/EP2007/051635
(87) Internationale Veröffentlichungsnummer: WO 2007/096368

(56) Entgegenhaltungen:
- EP-A2- 0 852 129
- WO-A-93/16655
- WO-A-2005/049239
- DE-U- 7 121 112

## Beschreibung

### Technisches Gebiet

Die Erfindung betrifft eine zahnärztliche Spüleinheit mit mindestens einem Wasserbehälter, der beispielsweise an eine Wasserversorgung anschließbar ist und über eine freie Einlaufstrecke mit Wasser befüllbar ist.

### Stand der Technik

In der DE 195 10 462 A1 ist eine Sauganlage beschrieben. Sie wird in Kombination mit einer gattungsgemäßen Spüleinheit eingesetzt. Die Spüleinheit weist ein Speibecken mit einer Wasserzufuhr über einen nicht beschriebenen WasserbehäIter auf. Ferner ist ein an das Speibecken angeschlossener Speicherbehälter als Zwischenspeicher für das zu entsorgende Wasser vorgesehen. Das zu entsorgende Wasser wird über die Sauganlage abgesaugt, die über im Boden verlegte Leitungen mit der Spüleinheit verbunden ist. Die in dem zu entsorgenden Wasser befindlichen Feststoffpartikel neigen dazu, sich an der Innenwand der Leitung festzusetzen, weshalb eine Reinigung in bestimmten Zeitintervallen unumgänglich ist.

Die Reinigung solcher Sauganlagen erfolgt gewöhnlich dadurch, dass ein Saugschlauch der Sauganlage mit viel Wasser gespült wird. Das Ende des Saugschlauchs wird hierzu in ein Gefäß mit Wasser getaucht, sodass eine relativ große Wassermenge durch den Saugschlauch gezogen wird. Dabei werden die an der Innenwand des Saugschlauchs festgesetzten Partikel teilweise mitgerissen und der Saugschlauch gereinigt. Aus der DE 71 21 112 U ist eine Vorrichtung zur Desinfektion des Absaugschlauchs von dentalen Nebelabsauganlagen bekannt, bei der ein freies Ende des Absaugschlauchs unmittelbar an den Behälter für das Desinfektionsmittel angeschlossen werden kann. Mittels eines elektrischen Schalters kann beim Einstecken des Schlauches einmal ein Sprühvorgang und zum anderen ein Absaugvorgang in Tätigkeit gesetzt werden.

In der EP 0 852 129 A2 ist eine Vorrichtung zum Entleeren von Sammelbehältern mit zahärztlichen Abwasser beschrieben. Der Sammelbehälter, der vorzugsweise einen Geruchsverschluss aufweist, hat eine Einlassöffnung und eine Auslassöffnung zu einer stromabwärts liegenden Absauganlage. Beim Befüllen des Behälters steigt die Gewichtskraft des Behälters und er sinkt ab. Dabei löst er einen Schalter aus, wodurch ein über der Auslassöffnung angebrachtes Ventil geöffnet wird und eine externe Absauganlage, die auch für einen etwaigen Speichelzieher und/oder einen Spraynebelsauger verwendet werden kann, eingeschaltet wird. Diese Absauganlage saugt daraufhin das Abwasser aus dem Sammelbehälter ab.

Der Erfindung liegt die Aufgabe zugrunde, eine Spüleinheit derart auszubilden und anzuordnen, dass die Reinigung der Sauganlage besser und zeitsparender erfolgen kann.

### Darstellung der Erfindung

Gelöst wird die Aufgabe mit den Merkmalen des Anspruchs 1.

Bei der zahnärztlichen Spüleinheit mit mindestens einem Wasserbehälter ist ein Reinigungsbehälter zum Reinigen eines Saugschlauchs eines Saughandstücks zum Absaugen von Flüssigkeiten und Feststoffen aus einem Patientenmund vorgesehen, der eine Einlassöffnung aufweist, welche mit dem Wasserbehälter verbunden ist und der weiterhin eine Auslassöffnung zum Anschluss eines Saugschlauchs aufweist, wobei die Auslassöffnung als Zapfstelle für den Saugschlauch eines Saughandstück ausgebildet ist. Der Wasserbehälter ist zum Reinigen der Sauganlage in der Spüleinheit integriert, so dass die Zapfstelle gleichzeitig der Aufbewahrungsort für den Saugschlauch sein kann und der Spülvorgang immer dann eingeleitet werden kann, wenn die Sauganlage nicht benutzt wird, also auch zwischen einzelnen Behandlungen.

Gemäß der Erfindung weist der Reinigungsbehälter zumindest einen als Reservoir ausgebildeten ersten Teilbehälter zur Aufnahme des Wassers und einen als Steigleitung ausgebildeten, an das Reservoir anschließenden zweiten Teilbehälter auf, wobei das offene, dem Reservoir gegenüberliegende Ende der Steigleitung die Auslassöffnung bildet. Der Reinigungsbehälter ist somit in zwei funktionel getrennte Einheiten unterteilt, die jeweils unterschiedliche Funktionen erfüllen. Das Reservoir nimmt das Wasser auf und begrenzt das Volumen. Die im Wesentlichen vertikal verlaufende Steigleitung bewirkt, dass während des Füllvorgangs noch kein Wasser in den Saugschlauch gelangt und dass auch bei geringstem Füllstand im Reservoir keine Luft über das Ventil über die Auslassöffnung abgesaugt werden kann.

Weiterhin ist eine Verbindung zwischen dem Reservoir und der Steigleitung unterhalb einer Belüftungsöffnung des Reinigungsbehälters und unterhalb der Auslassöffnung angeordnet. Dadurch steht das gesamte im Reservoir befindliche Wasser beim Spülen zur Verfügung.

Vorteilhafterweise ist der Reinigungsbehälter mit Hilfe von Unterdruck, der bei angeschlossenem Saugschlauch an der Auslassöffnung anliegt, mit dem Wasser aus dem Wasserbehälter befüllbar. Dadurch wird erreicht, dass das Befüllen des Reinigungsbehälters automatisch erfolgen kann. Eine manuelle Füllung eines separaten Reinigungsbehälters entfällt. Dadurch wird weiterhin erreicht, dass eine separate Pumpe oder ähnliche Mittel, mit deren Hilfe der Reinigungsbehälter gefüllt werden könnte, durch die Sauganlage ersetzt werden. Die Sauganlage, die zum Reinigen ohnehin in Betrieb genommen werden muss, dient gleichzeitig als Fördermittel für das zur Reinigung verwendete Wasser aus dem Wasserbehälter.

Vorteilhaft ist es hierzu auch, dass der Reinigungsbehälter zusätzlich zu der Einlassöffnung eine Belüftungsöffnung aufweist und der Reinigungsbehälter mit Hilfe von Unterdruck, der an der Auslassöffnung erzeugbar ist, mit dem Wasser aus dem Wasserbehälter befüllbar ist und dass an der Belüftungsöffnung mindestens ein Ventil einer Steuereinheit angeordnet ist, wobei das Ventil manuell und/oder mit Hilfe einer Steuerung der Steuereinheit in Abhängigkeit zumindest einer physikalischen Größe automatisch geöffnet, geschlossen und verstellt werden kann.

Das Ventil dient der Belüftung des gefüllten Reinigungsbehälters und ist während des Füllvorgangs geschlossen. Während und unmittelbar nach dem Befüllen des Reinigungsbehälters herrscht bedingt durch das Saugen Unterdruck im Reinigungsbehälter. Durch ein schnelles Belüften des Reinigungsbehälters wird das im Reinigungsbehälter befindliche Wasser stoßartig in den Saugschlauch befördert. Der dadurch erzeugte Impuls ist maßgeblich für die Qualität der Reinigung. Je größer der Impuls ist, desto mehr Feststoffpartikel werden mitgerissen. Die Größe des Impulses hängt maßgeblich vom Volumen des Wassers ab, das im Reinigungsbehälter bei einer Spülung zur Verfügung steht.

Eine zusätzliche Möglichkeit ist gemäß einer Weiterbildung, dass die Steuereinheit zusätzlich ein das Ventil steuerndes Steuerventil aufweist. Dadurch wird die Belüftung vereinfacht und je nach Dimensionierung des Steuerventils werden sehr schnelle Verschlusszeiten des Ventils erreicht. Grundlegend für die erfindungsgemäße Impulsspülung ist, dass das Ventil geschlossen ist, wenn der Reinigungsbehälter gefüllt ist. Da der Impuls durch die schnelle Belüftung des Reinigungsbehälters bewirkt wird, sollte das Ventil eine möglichst große Nennweite aufweisen.

Ferner ist es vorteilhaft, dass die Steuereinheit mit zumindest einem Drucksensor zusammenwirkt, über den ein Unterdruck innerhalb des Wasserbehälters und/oder, des Reinigungsbehälters steuerungstechnisch erfassbar ist.

Der Spülvorgang wird mit dem Befüllen des Reinigungsbehälters eingeleitet. Solange das Ventil geöffnet ist, kann kein Unterdruck aufgebaut und somit auch kein Wasser aus dem Wasserbehälter angesaugt werden. Im Ruhezustand ist das Ventil geschlossen. Mit dem Aufsetzen des Saugschlauchs auf den Reinigungsbehälter entsteht ein Unterdruck. Der Drucksensor reagiert auf diesen Unterdruck und startet ein Zeitglied. Darüber hinaus beginnt der Füllvorgang des Reinigungsbehälters. Das Ventil öffnet nach Ablauf eines bestimmten Zeitintervalls, das über ein Zeitglied der Steuerung gemessen wird. Das Zeitintervall ist so bemessen, dass der Reinigungsbehälter vollständig befüllt wird.

Vorteilhaft ist es auch, dass die Steuereinheit zumindest einen am Reinigungsbehälter angeordneten Füllstandsgeber aufweist, über den zumindest eine Füllhöhe des Wassers innerhalb des Reinigungsbehälters steuerungstechnisch erfassbar ist. Der Reinigungsbehälter wird nur so lange gefüllt, wie der Saugschlauch an der Auslassöffnung anliegt und somit im Reinigungsbehälter Unterdruck herrscht. Zur Detektierung des anliegenden Unterdrucks sollte das Ventil geschlossen sein. Ansonsten wäre die Druckdifferenz beim Abziehen des Saugschlauchs von der Auslassöffnung zur Detektierung zu gering. Dadurch wird verhindert, dass beim irrtümlichen Abziehen des Saugschlauchs der Reinigungsbehälter weiterhin befüllt wird. Der maximal zulässige Füllstand im Reinigungsbehälter wird erreicht, wobei der Füllstandsgeber ausgelöst wird. Daraufhin wird das Öffnen des Ventils in die Wege geleitet. Die Impulsspülung erfolgt dadurch erst, wenn der Reinigungsbehälter voll ist, da erst dann die zur effizienten Reinigung notwendige Wassermenge zur Verfügung steht. Der Reinigungszyklus kana mehrmals wiederholt werden, um eine gründlichere Reinigung zu erreichen. Es kann eine Rückkopplung vorgesehen werden, indem nach der Impulsspülung das Ventil geschlossen wird und der Reinigungsbehälter wieder befüllt wird. Als Auslöser für das Befüllen nach der Impulsspülung kann der Füllstandsgeber, der kein Wasser im Reinigungsbehälter detektiert, oder das Streuerventil, der das Ventil schließt, sein. Die Schleife der wiederholenden Reinigungszyklen kann dann beispielsweise durch das Abziehen des Saugschlauchs oder durch eine Unterbrechung der Versorgungszuleitung zum Füllen des Reinigungsbehälters.

Alternativ ist es vorgesehen, dass die Steuereinheit zumindest einen manuell bedienbaren Schalter aufweist, über den das Ventil schaltbar ist. Dadurch wird erreicht, dass der Füllvorgang durch das Schließen des Ventils erst eingeleitet wird, wenn der Schalter betätigt wurde. Im Grundzustand ist also das Ventil offen und wird durch das Auslösen des Schalters geschlossen. Nach dem Schließen des Ventils wird Wasser aus dem Wasserbehälter angesaugt. Eine Einleitung des Füllvorgangs durch das Schließen des Ventils erfolgt somit nicht automatisch.

Das Impulsspülen kann dadurch verstärkt werden, dass der Ausgang des Ventils mit der Belüftungsöffnung verbunden ist und dass der Eingang des Ventils mit der Atmosphäre oder mit einem Überdruckbehälter verbunden ist. Bei diesem Überdruckverfahren wird Druckluft in das System eingespeist, wenn das Ventil geöffnet wird. Das Druckgefälle innerhalb des Reinigungsbehälters in Richtung Auslassöffnung wird dadurch weiter erhöht und die Absauggeschwindigkeit und somit der Impuls vergrößert. Die Druckluft wird bevorzugt bei sehr langen Saugschläuchen und sehr langen Entsorgungsleitungen der Sauganlage eingesetzt.

Vorzugsweise ist dann ein Sensor vorgesehen, der feststellt ob der Saugschlauch an der Auslassöffnung des Reinigungsbehälters angeschlossen ist und schaltet den Überdruck bei einem vorzeitigen Entfernen des Saugschlauchs sofort ab. Dadurch wird verhindert, dass beim irrtümlichen Entfernen des Saugschlauchs während dem Füllvorgang das Wasser unter Druck aus der offenen Auslassöffnung austritt.

Vorteilhafterweise ist der Reinigungsbehälter relativ zum Wasserbehälter oberhalb des höchstmöglichen Füllstandniveaus des Wassers im Wasserbehälter angeordnet. Dadurch ist sichergestellt, dass der Reinigungsbehälter nur gefüllt wird, wenn die Sauganlage angeschlossen ist, ohne dass weitere Ventile in der Leitung vorgesehen werden müssten. Würden der Reinigungsbehälter und die Leitung zumindest teilweise unterhalb des höchstmöglichen Füllstandniveaus im Wasserbehälter angeordnet sein, so würde das Wasser ohne weitere Sicherungsmaßnahmen in den Reinigungsbehälter fließen.

Im Zusammenhang mit der erfindungsgemäßen Ausbildung und Anordnung ist es von Vorteil, dass an dem Wasserbehälter eine Mischanlage angeschlossen ist und mit Hilfe der Mischanlage dem Wasser im Wasserbehälter ein Reinigungsmittel dosiert zuführbar ist.

Alternativ ist es vorteilhaft, wenn das Reservoir und die Steigleitung als U-förmiges Rohr, als Schlauchstück oder als Siphon ausgebildet sind. Solche Grundformen erfüllen alle die vorstehend beschriebenen Vorteile.

Die Befüllung des erfindungsgemäßen Reinigungsbehälters muss nicht zwingend durch die Sauganlage erfolgen, auch andere Befüllmethoden des Reinigungsbehälters sind vorstellbar, etwa mittels einer Pumpe.

Eine der bevorzugten Lösungen ist aber.ein System bestehend aus einer Spüleinheit nach einem der vorstehenden Ansprüche und einer zahnärztlichen Sauganlage, wobei die Sauganlage mindestens ein über einen Saugschlauch angeschlossenes Saughandstück aufweist.

Es ist vorgesehen, dass die Sauganlage mehrere Saugschläuche und die Spüleinheit mehrere Reinigungsbehälter und/oder mehrere Zapfstellen an einem Reinigungsbehälter aufweisen kann.

Der erfindungsgemäßen Spüleinheit liegt ein Verfahren zu Grunde, mit dem ein Saugschlauch einer solchen Sauganlage gereinigt werden kann. Bei diesem Verfahren wird die Sauganlage eingeschaltet, z.B. automatisch bei Entnahme des Saugschlauchs eines Saughandstücks aus einer Halterung, wobei der Wasserbehälter stets zumindest teilweise mit Wasser gefüllt ist. Der Saugschlauch des Saughandstücks wird an die Auslassöffnung des Reinigungsbehälters angeschlossen, wobei die Auslassöffnung als Zapfstelle ausgebildet ist. Bei manueller Steuerung wird das Ventil nach Betätigung des Schalters geschlossen und somit der Füllvorgang eingeleitet. Bei automatischer Steuerung ist das Ventil im Grundzustand bereits geschlossen und beim Anschließen des Saugschlauchs setzt der Füllvorgang unmittelbar ein. Durch den durch die Sauganlage über den Saugschlauch im Reinigungsbehälter erzeugten Unterdruck wird das Wasser aus dem Wasserbehälter in den Reinigungsbehälter gesaugt. Die Menge des in den Reinigungsbehälter fließenden Wassers wird durch Zeitmessung oder mit Hilfe eine des Niveausensors im Reinigungsbehälter gesteuert. Nachdem eine bestimmte Menge Wasser in den Reinigungsbehälter geflossen ist, wird das Ventil geöffnet und die im Reinigungsbehälter befindliche Menge Wasser wird von der Sauganlage angesaugt und tritt zumindest teilweise stoßartig aus dem Reinigungsbehälter aus und strömt dabei durch den Saugschlauch.

Hierzu ist es vorteilhaft, dass die Zeitmessung durch ein Zeitglied der Steuerung nach dem Schließen des Ventils gestartet wird. Dies ist eine der einfachsten Lösungen, die relativ wartungsfrei ist.

Von wesentlichem Vorteil ist, wenn das Ventil geöffnet wird, nachdem der Füllstandsgeber im Reinigungsbehälter maximalen Füllstand signalisiert. Dadurch wird das maximale Volumen des Reinigungsbehälters bzw. des Reservoirs genutzt, was wiederum den Impuls zum Reinigen erhöht.

Ferner ist es vorteilhaft, dass das Ventil unmittelbar nach dem Spülvorgang oder nach dem Erzeugen von Unterdruck im Reinigungsbehälter geschlossen wird. Dadurch wird erreicht, dass der Befüllungsvorgang des Reinigungsbehälters immer dann automatisch eingeleitet werden kann, wenn der Saugschlauch auf die Auslassöffnung aufgesetzt wird.

Alternativ ist vorgesehen, dass das Ventil vor dem Befüllen des Reinigungsbehälters durch den manuell bedienbaren Schalter der Steuerung geschlossen wird. Dabei wird das im Grundzustand geöffnete Ventil durch Betätigung des Schalters geschlossen und der Füllvorgang setzt ein.

Eine intensive Reinigung des Saugschlauchs und der weiteren Entsorgungsleitungen wird dadurch erreicht, dass nach Beendigung eines ersten Spülverfahrens und vor dem Abziehen des Saugschlauchs von der Auslassöffnung mindestens ein weite rer Spülgang eingeleitet wird. Solange der Saugschlauch nicht gebraucht wird und auf der Auslassöffnung bzw. auf der Zapfstelle aufsitzt, ist die Möglichkeit zur Reinigung gegeben.

Der Reinigungseffekt kann weiter dadurch gesteigert werden, dass das Wasser aus dem Reinigungsbehälter nach dem Öffnen des Ventils zusätzlich zu dem an der Auslassöffnung erzeugten Unterdruck mit Hilfe von Pressluft in den Saugschlauch befördert wird, wobei die Pressluft über das Ventil eingeleitet wird. Dabei ist vorzugsweise ein Sensor vorgesehen, der feststellt ob der Saugschlauch angeschlossen ist und beim vorzeitigen Abziehen des Saugschlauchs den Überdruck sofort abschaltet.

### Kurzbeschreibung der Zeichnungen

Die erfindungsgemäße Vorrichtung und das erfindungsgemäße Verfahren werden anhand der Zeichnung erläutert. Es zeigen:
- Fig. 1: ein Funktionsschema eines Systems bestehend aus einer Spüleinheit und einer zahnärztlichen Sauganlage mit einem Drucksensor,
- Fig. 2: eine Spüleinheit gemäß Fig. 1 mit einem manuellen Schalter,
- Fig. 3: eine Spüleinheit gemäß Fig. 1 mit einem Niveausensor,
- Fig. 4: einen Teilschnitt eines Reinigungsbehälters mit einem Reservoir und einer Steigleitung,
- Fig. 5: ein Schema für eine Impulsspülung mit Überdruck und die
- Fig. 6: ein Schema für ein als pneumatische Einheit ausgebildetes Zeitglied zwischen einem Steuerventil und einem Ventil für eine Stoßspülung.

### Ausführungsbeispiele der Erfindung

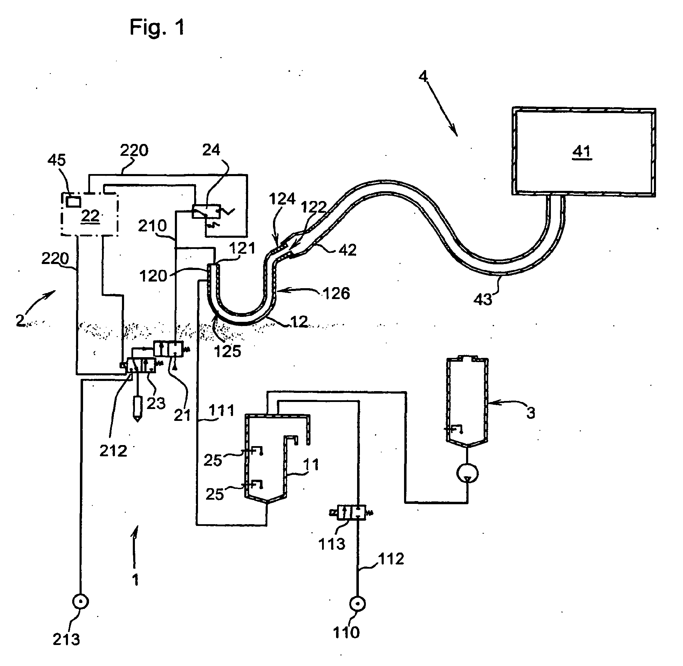

In Fig. 1 ist mit Ziffer 1 eine Spüleinheit 1 vornehmlich für Zahnärzte beziffert, die einen Wasserbehälter 11 umfasst. Der Wasserbehälter 11 enthält eine freie Einlaufstrecke und ist über eine Versorgungsleitung 112 an einer üblichen Wasserversorgung 110 angeschlossen.

Innerhalb des Wasserbehälters 11 sind ein oberer und ein unterer Niveausensor 25 zur Überwachung des Füllstandes vorgesehen. Sobald das Niveau des Wassers im Wasserbehälter 11 unter die Position des unteren Niveausensors 25 fällt, wird ein Ventil 113 an der Versorgungsleitung 112 geöffnet und der Wasserbehälter 11 über den an der Wasserversorgung 110 zur Verfügung stehenden Druck gefüllt. Sobald das Wasser den oberen Niveausensor 25 erreicht, wird das Ventil 113 wieder geschlossen.

Dem Wasserbehälter 11 kann über ein nicht dargestelltes Entnahmesystem das Wasser oder eine sonstige im Wasserbehälter 11 befindliche Flüssigkeit entnommen werden. Hierzu weist das Entnahmesystem zumindest eine Pumpe auf. Solche Entnahmesysteme werden bspw. für Speibecken eingesetzt, die unmittelbar neben den Behandlungsstühlen von Zahnärzten angeordnet sind.

Neben einer solchen Spüleinheit 1 kommt eine Sauganlage 4 zum Einsatz. Mit Hilfe der Sauganlage 4 werden während der Zahnbehandlung Flüssigkeiten und Feststoffe aus dem Patientenmund abgesaugt. Die Sauganlage 4 umfasst einen Unterdruckerzeuger 41 und ein über einen Saugschlauch 43 angeschlossenes Saughandstück 42, über das die Flüssigkeiten und Feststoffe entsorgt werden. Die Feststoffe setzen sich bevorzugt an der Innenwand des flexiblen Saugschlauchs 43 ab.

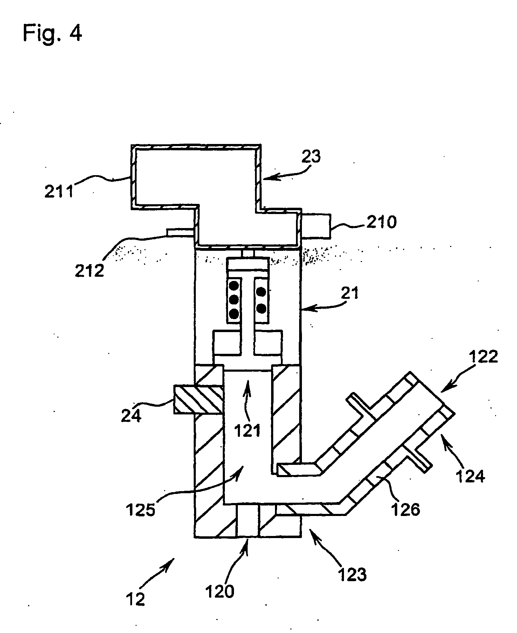

Der Saugschlauch 43 wird mit Hilfe eines Reinigungsbehälters 12 und einer Steuereinheit 2 gereinigt. Der Reinigungsbehälter 12 bildet ein Reservoir 125 für das Wasser und weist eine Einlassöffnung 120 auf, über die der Reinigungsbehälter 12 mit Hilfe einer Leitung 111 mit dem wässerbehälter 11 verbunden ist. Ferner weist der Reinigungsbehälter 12, wie auch in Fig. 4 dargestellt, eine Belüftungsöffnung 121 und eine Auslassöffnung 122 auf. Die Belüftungsöffnung 121 dient der Belüftung des Reservoirs 125, wenn das Wasser über die Auslassöffnung 122 entnommen wird. Die Auslassöffnung 122 ist am Ende einer an das Reservoir 125 anschließenden Steigleitung 126 angeordet, sodass die Belüftungsöffnung 121 und die Auslassöffnung 122 durch eine Wassersäule voneinander getrennt sind.

Mit Hilfe der Sauganlage 4 bzw des Saughandstücks 42, das an der als Zapfstelle 124 ausgebildeten Auslassöffnung 122 des Reinigungsbehälters 12 aufgesteckt werden kann, wird im Reinigungsbehälter 12 ein Unterdruck erzeugt. Wenn gleichzeitig die Belüftungsöffnung 121 geschlossen ist, wird das Wasser aus dem Wasserbehälter 11 über die Leitung 111 in den Reinigungsbehälter 12 gesaugt und dieser füllt sich.

Ab einem gewissen Füllstandniveau im Reinigungsbehälter 12 wird die Belüftungsöffnung 121 geöffnet, sodass das im Reinigungsbehälter 12 befindliche Wasser durch den Unterdruck stoßartig in den Saugschlauch 43 eingesaugt wird. Diese Stoß- oder Impulsspülung bewirkt, dass das Wasser mit einer hohen Strömungsgeschwindigkeit durch den Saugschlauch 43 strömt, die festgesetzten Feststoffpartikel mitreißt und dadurch eine gute reinigende Wirkung hat.

Die strömungsdynamische Reinigungswirkung wird dadurch weiter verbessert, dass durch ein entsprechend großes Volumen an Wasser, das 20 bis 150 ml beträgt, im Reinigungsbehälter 12 bzw. im Reservoir 125 die gesamte Innenwandung des Saugschlauchs 43 von der durchströmenden Flüssigkeit benetzt wird.

Eines der wesentlichsten Merkmale der Erfindung, nämlich dass das Volumen an Wasser für die Stoßspülung der Sauganlage 4 durch die Sauganlage 4 selbst aus dem Wasserbehälter 11 angesaugt wird, erfordert eine besondere Gestaltung des Reinigungsbehälters 12. Der Reinigungsbehälter 12 muss derart konstruiert sein, dass während des Füllvorgangs noch kein Wasser in die Sauganlage 4 gelangt. Hierzu muss die Auslassöffnung 122 im oberen Bereich des Volumens des Reinigungsbehälters 12 angeordnet sein.

Ferner muss gewährleistet sein, dass nach dem Öffnen der Belüftungsöffnung 121 das gesamte Volumen an Wasser im Reinigungsbehälter 12 in die Sauganlage 4 fließt, ohne dass Luft angesaugt wird. Hierzu muss die Belüftungsöffnung 121 ebenfalls im oberen Bereich des Volumens des Reinigungsbehälters 12 angeordnet sein.

Zudem müssen die Auslassöffnung 122 und die Belüftungsöffnung 121 durch das Wasser bzw. eine Wassersäule voneinander getrennt sein. Die beim Absaugen des Wassers durch die Belüftungsöffnung 121 eingesaugte Luft darf, solange Wasser im Reinigungsbehälter 12 vorhanden ist, nicht in die Sauganlage 4 gelangen.

Diesen Erfordernissen kann bspw. mit einer Anordnung bzw. mit einem Reinigungsbehälter 12 Rechnung getragen werden, der in der Art eines U-förmigen Rohres oder eines Siphons ausgebildet ist. Eine mögliche Lösung ist der in Fig. 4 näher dargestellte Reinigungsbehälter 12 mit dem Reservoir 125 und der im unteren Bereich des Reservoirs 125 über eine Verbindung 123 anschließenden Steigleitung 126.

Die Einlassöffnung 120 ist an einer beliebigen Stelle zwischen der Belüftungsöffnung 121 und der Auslassöffnung 122 angeordnet. An der Belüftungsöffnung 121 ist ein Ventil 21 angeschlossen, das über ein Steuerventil 23 und eine Steuerung 22'über Steuerleitungen 220 gesteuert wird. Das Steuerventil 23 ist ein über einen Druckluftanschluss 212 pneumatisch angetriebenes Stellglied für das Ventil 21. Das Ventil 21, das Steuerventil 23 und die Steuerung 22 sind Teile der Steuereinheit 2 für die Spüleinheit 1.

Das Ventil 21 ist über eine Belüftungsleitung 210 mit dem Reinigungsbehälter 12 verbunden und gewährleistet im geschlossenen Zustand, dass sich der Reinigungsbehälter 12 füllt, wenn der Saugschlauch 43 an die Auslassöffnung 122 angeschlossen ist. Wenn der Reinigungsbehälter 12 mit Wasser gefüllt ist, gewährleistet ein Öffnen des Ventils 21 die Impulsspülung. Hierzu wird das Ventil 21 schnell geöffnet und ist derart dimensioniert, dass es die Saugluft so wenig wie möglich drosselt, um eine maximale Strömungsgeschwindigkeit der Wassersäule im U-förmigen Reinigungsbehälter 12 zu erreichen.

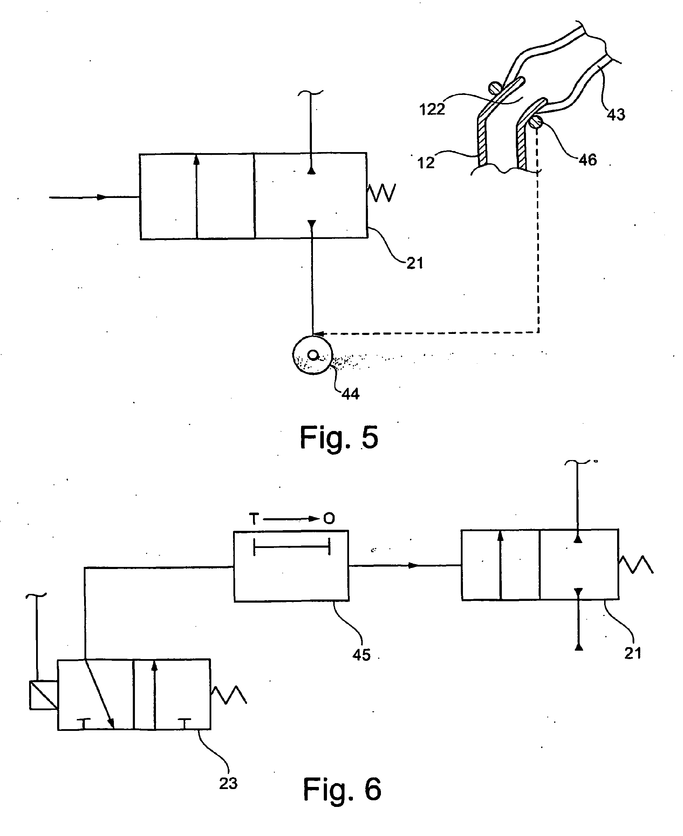

Die Impulsspülung kann dadurch verstärkt werden, dass das Ventil 21 auf der der Belüftungsleitung 210 gegenüberliegenden Seite anstatt mit atmosphärischem Druck mit Überdruck beaufschlagt wird. In diesem in Fig. 5 dargestellten Ausführungsbeispiel wird nach dem Öffnen des Ventils 21 Druckluft aus einem Druckbehälter bzw. Druckluftanschluss 44 über das Ventil 21 und die Belüftungsleitung 210 in das Reservoir 125 gefördert. Der ohnehin durch den vor dem Öffnen im Reinigungsbehälter 12 schon herrschenden Unterdruck erzeugte Impuls wird durch die Druckluft weiter verstärkt. Dabei ist ein Sensor 46 vorgesehen, der feststellt ob der Saugschlauch 43 an der Auslassöffnung 122 des Reinigungsbehälters 12 angeschlossen ist und schaltet den Überdruck bei einem vorzeitigen Entfernen des Saugschlauchs sofort ab. Die in den Fig. 1 bis 3 dargestellten Spüleinheiten 1 unterscheiden sich durch die steuer- und regelungstechnischen Muttel, mit denen das Spülverfahren eingeleitet und durchgeführt wird.

Nach dem Verfahren gemäß Fig. 1 ist das Ventil vor dem Spülvorgang im Ruhezustand geschlossen. Beim Anschließen des Saugschlauchs 43 an den Reinigungsbehälter 12 entsteht im Reinigungsbehälter 12 ein Unterdruck und der Füllvorgang des Reinigungsbehälters 12 wird eingeleitet. An der Belüftungsleitung 210 ist ein Drucksensor 24 angeschlossen, der nach dem Anschließen des Saugschlauch 43 an den Reinigungsbehälter 12 durch den Druckabfall im Reinigungsbehälter 12 und in der Belüftungsleitung 210 aktiviert wird und ein entsprechendes Signal an die Steuerung 22 der Steuereinheit 2 weitergibt.

Ein Zeitglied 45 steuert die Dauer des Füllvorgangs. In Fig.1 ist das Zeitglied 45 in der Steuerung 22 integriert. In Fig. 6 list das Zeitglied 45 als pneumatische Einheit zwischen dem Steuerventil 23 und dem Ventil 21 dargestellt. Das Zeitglied 45 verzögert das Signal des Steuerventils 23 an das Ventil 21 um ein entsprechendes Zeitintervall. Nach Ablauf dieses Zeitintervalls vom Zeitpunkt der Aktivierung des Drucksensors 24 an wird das Ventil 21 geöffnet, wodurch die Stoßspülung erfolgt. Dieser Vorgang wird so lange wiederholt, wie der Saugschlauch 43 an dem Reinigungsbehälter 12 angeschlossen ist, d. h. das Ventil 21 wird wieder geschlossen und der Vorgang wiederholt sich. Alternativ hierzu ist vorgesehen, dass die Steuerung 22 nach einer oder mehreren Stoßspülungen das Spülverfahren solange unterbricht, wie der Saugschlauch 43 nicht von der Zapfstelle 124 abgenommen wird. Nach dem Abnehmen des Saugschlauchs 43 liegt kein Unterdruck mehr an und der Drucksensor 24 wird nicht mehr ausgelöst. Das Ventil 21 verbleibt also im geschlossenen Zustand und die Spüleinheit 1 befindet sich im Ruhezustand.

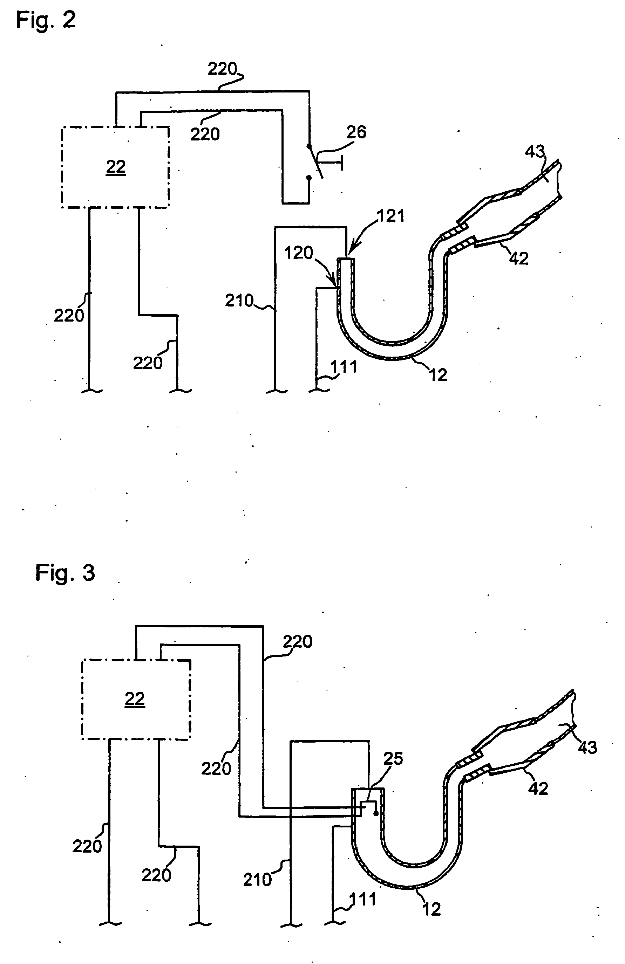

In einem Ausführungsbeispiel gemäß Fig. 2 ist anstatt des Drucksensors 24 ein manueller Schalter 26 vorgesehen, mit dessen Hilfe das Signal erzeugt werden kann, das das Schließen des Ventils 21 bewirkt, und wodurch der vorstehend beschriebene Spülvorgang ein- oder mehrmals eingeleitet wird. In diesem Ausführungsbeispiel ist das Ventil 21 in geöffneter Stellung im Ruhezustand.

In einem weiteren Ausführungsbeispiel gemäß Fig. 3 ist anstatt des Zeitgliedes 45 der Füllstandsgeber 25 im Reinigungsbehälter 12 vorgesehen, mit dessen Hilfe bei einem gewissen Füllstand ein Signal erzeugt wird, das zum Öffnen des Ventils 21 führt. Hierbei ist das Ventil 21 im Ruhezustand vor dem Einleiten des Spülvorgangs geschlossen.

Die Verfahrensvariante mit dem Füllstandsgeber 25 gemäß Fig. 3 erfolgt in Kombination mit dem Drucksensor 24. Es ist auch vorgesehen, dieses Verfahren mit dem manuellen Schalter 26 gemäß dem Verfahren nach Fig. 2 zu kombinieren. Der Spülvorgang wird somit immer dann eingeleitet, wenn der Saugschlauch 43 an dem Reinigungsbehälter 12 angeschlossen ist und dieser Zustand der Steuerung 22 mit Hilfe des Drucksensors 24 oder des Schalters 26 signalisiert wird.

Der Drucksensor 24, der Schalter 26 und der Füllstandsgeber 25 sind über die Steuerleitungen 220 mit der Steuerung 22 verbunden.

Wie in Fig. 1 dargestellt, ist eine Mischanlage 3 vorgesehen, mit deren Hilfe dem Wasser im Wasserbehälter 11 während des Befüllens eine vorgegebene Menge Reinigungs- oder Desinfektionsmittel zugemischt wird.

In Fig. 4 ist ein Ausführungsbeispiel des Reinigungsbehälters 12 mit der Einlassöffnüng 120, der Belüftungsöffnung 121 und der Auslassöffnung 122 dargestellt, der die Anforderungen an die beschriebene Form eines Siphons erfüllt. Der Reinigungsbehälter 12 selbst weist dabei das zylinderförmige Reservoir 125 für das Wasser auf, an das die die Auslassöffnung 122 bildende und im Wesentlichen vertikal verlaufende Steigleitung 126 abschließt. Die Steigleitung 126 ist über die Verbindung 123 mit dem Reservoir 125 strömungstechnisch verbunden. Die Steigleitung 126 schließt am Boden des Reservoirs 125 an und führt durch einen abgewinkelten Leitungsverlauf wieder nach oben. Bevor nicht zumindest das Reservoir 125 fast vollständig leer ist, kann keine Luft von der Belüftungsöffnung 121 durch die Steigleitung 126 und die Auslassöffnung 122 entweichen.

Die Einlassöffnung 120. ist am Boden des Reinigungsbehälters 12 bzw. des Reservoirs 125 angeordnet und an dieser ist die nicht dargestellte Leitung des Wasserbehälters 11 angeschlossen. Das Ventil 21 ist in einem Ventilgehäuse 211 angeordnet, das auf dem Reinigungsbehälter 12 aufsitzt. An dem Ventilgehäuse 211 ist der Druckluftanschluss 212 einer Druckluftquelle 213 zur Ansteuerung des Steuerventils 23 angeordnet.

Durch das Ventilgehäuse 211 wird das Reservoir 125 nach oben hin verschlossen. Somit sind neben der Einlassöffnung 120, der Belüftungsöffnung 121 und der Auslassöffnung 122 keine weiteren Öffnungen am Reinigungsbehälter 12 vorgesehen.

## Patentansprüche

1. Zahnärztliche Spüleinheit (1) mit mindestens einem Wasserbehälter (11) und mit einem Reinigungsbehälter (12) zum Reinigen eines Saugschlauches (43) eines Saughandstücks (42) zum Absaugen von Flüssigkeiten und Feststoffen aus einem Patientenmund, wobei der Reinigungsbehälter (12) eine Einlassöffnung (120), welche mit dem Wasserbehälter (11) verbunden ist und weiterhin eine Auslassöffnung (122) zum Anschluss des Saugschlauchs (43) aufweist, wobei die Auslassöffnuhg (122) als Zapfstelle (124) für den Saugschlauch (43) des Saughandstücks (42) ausgebildet ist und wobei der Reinigungsbehälter (12) zumindest einen als Reservoir (125) ausgebildeten ersten Teilbehalter zur Aufnahme des Wassers und einen als Steigleitung (126) ausgebildeten, an das Reservoir (125) anschließenden zweiten Teilbehälter aufweist, wobei das offene, dem Reservoir (125) gegenüberliegende Ende der Steigleitung (126) die Auslassöffnung (122) bildet und wobei eine Verbindung (123) zwischen dem Reservoir (125) und der Steigleitung (126) unterhalb einer Belüftungsöffnung (121) des Reinigungsbehälters (12) und unterhalb der Auslassöffnung (122) angeordnet ist.

2. Spüleinheit (1) nach Anspruch 1, wobei an der Belüftungsöffnung (121) mindestens ein Ventil (21) angeordnet ist, wobei das Ventil (21) manuell und/oder mit Hilfe einer Steuerung (22) einer Steuereinheit (2) in Abhängigkeit zumindest einer physikalischen Größe automatisch geöffnet, geschlossen und verstellt werden kann.

3. Spüleinheit (1) nach Anspruch 2, wobei die Steuereinheit (2) mit zumindest einem Drucksensor (24) zusammenwirkt, über den ein Unterdruck innerhalb des Wasserbehälters (11) und/oder des Reinigungsbehälters (12) steuerungstechnisch erfassbar ist.

4. Spüleinheit (1) nach einem der Ansprüche 2 oder 3, wobei Steuereinheit (2) zumindest einen am Reinigungsbehälter (12) angeordneten Füllstandsgeber (25) aufweist, über den zumindest eine Füllhöhe des Wassers innerhalb des Reinigungsbehälters (12) steuerungstechnisch erfassbar ist.

5. Spüleinheit (1) nach einem der Ansprüche 2 bis 4, wobei der Ausgang des Ventils (21) mit der Belüftungsöffnung (121) verbunden ist und dass der Eingang des Ventils (21) mit der Atmosphäre oder mit einem Überdruckbehälter verbunden ist.

6. Spüleinheit (1) nach Anspruch 5, wobei ein Sensor (46) vorgesehen ist, der den Anschluss des Saugschlauchs (43) an der Auslassöffnung (122) des Reinigungsbehälters (12) feststellt und bei einem vorzeitigen Entfernen des Saugschlauchs (43) den Überdruck sofort abschaltet.

7. Spüleinheit (1) nach einem der Ansprüche 1 bis 6, wobei der Reinigungsbehälter (12) relativ zum Wasserbehälter (11) oberhalb des höchstmögliche Füllstands des Wassers im Wasserbehälter (11) angeordnet ist.

8. Spüleinheit (1) nach einem der Ansprüche 1 bis. 7, wobei das Reservoir (125) und die Steigleitung (126) als U-förmiges Rohr, als Schlauchstück oder als Siphon ausgebildet sind.

9. System bestehend aus einer Spüleinheit (1) nach einem der vorstehenden Ansprüche und einer zahnärztlichen Sauganlage (4), wobei die Sauganlage (4) mindestens ein über einen Saugschlauch (43) angeschlossenes Saughandstück (42) aufweist.

10. System nach Anspruch 9, bei dem die Sauganlage (4) mehrere Saugschläuche (43) und die Spüleinheit (1) mehrere Reinigungsbehälter (12) und/oder mehrere Zapfstellen (124) an einem Reinigungsbehälter (12) aufweist.

11. Verfahren zum Spülen eines Saugschlauchs (43)eines Saughandstücks (42) einer zahnärztlichen Sauganlage (4) mit einer Spüleinheit (1) nach einem der vorstehenden Ansprüche mit folgenden Verfahrensschritten:
a) der Wasserbehälter (11) ist zumindest teilweise mit Wasser gefüllt;
b) die Sauganlage (4) ist eingeschaltet;
c) der Saugschlauch (43) ist an eine Auslassöffnung (122) des Reinigungsbehälters (12) angeschossen, wobei die Auslassöffnung (122) als Zapfstelle ausgebildet ist;
d) die Belüftungsöffnung (121) des Reinigungsbehälters (12) ist geschlossen;
dann läuft folgendes ab:
e) durch den durch die Sauganlage (4) über den Saugschlauch (43) im Reinigungsbehälter (12) erzeugten Unterdruck wird das Wasser aus dem Wasserbehälter (11) in den Reinigungsbehälter (12) gesaugt;
f) die Menge des in den Reinigungsbehälter (12) fließenden Wassers wird durch Zeitmessung oder mit Hilfe des Füllstandsmessers (25) im Reinigungsbehälter (12) gesteuert;
g) nachdem eine bestimmte Menge Wasser in den Reinigungsbehälter (12) geflossen ist, wird das Ventil (21) geöffnet und die im Reinigungsbehälter (12) befindliche Menge Wasser wird von der Sauganlage (4) angesaugt und tritt zumindest teilweise stoßartig aus dem Reinigungsbehälter (12) aus und strömt dabei durch den Saugschlauch (43).

12. Verfahren nach Anspruch 11, wobei die Zeitmessung für die Öffnung des Ventils (21) durch ein Zeitglied (45) der Steuerung (22) nach dem Schließen des Ventils (21) gestartet wird.

13. Verfahren nach Anspruch 11, wobei das Ventil (21) geöffnet wird, nachdem der Füllstandsgeber (25) im Reinigungsbehälter (12) maximalen Füllstand signalisiert.

14. Verfahren nach einem der Ansprüche 11 bis 13, wobei das Ventil (21) unmittelbar nach dem Spülvorgang oder nach dem Erzeugen von Unterdruck im Reinigungsbehälter (12) geschlossen wird.

15. Verfahren nach einem der Ansprüche 11 bis 14, wobei das Wasser aus dem Reinigungsbehälter (12) nach dem Öffnen des Ventils (21) zusätzlich zu dem an der Auslassöffnung (122) erzeugten Unterdruck mit Hilfe von Pressluft in den Saugschlauch (43) befördert wird, wobei die Pressluft über das Ventil (21) eingeleitet wird.

## Claims

1. A dental rinsing unit (1) comprising at least one water tank (11) and further comprising a cleaning tank (12) for cleaning a suction hose (43) of a suction handpiece (42) for sucking liquids and solids out of a patient's mouth, wherein said cleaning tank (12) has an inlet orifice (120) that communicates with said water tank (11), and furthermore has an outlet orifice (122) for the attachment of said suction hose (43), wherein said outlet orifice (122) is in the form of a tap (124) for said suction hose (43) of said suction handpiece (42), and wherein said cleaning tank (12) has at least one first sub-container in the form of a reservoir (125) for holding water and a second sub-container in the form of a riser (126) communicating with said reservoir (125), whilst the open end of said riser (126) remote from said reservoir (125) forms said outlet (122) and a connection (123) between said reservoir (125) and said riser (126) is disposed below a vent hole (121) of said cleaning tank (12) and below said outlet orifice (122).

2. The rinsing unit (1) as defined in claim 1, wherein at least one valve (21) is situated on said vent hole (121), and said valve (21) can be opened, closed and adjusted manually and/or automatically with the aid of a control system (22) in a control unit (2) in accordance with at least one physical parameter.

3. The rinsing unit (1) as defined in claim 2, wherein said control unit (2) cooperates with at least one pressure sensor (24), which is adapted to detect the negative pressure within said water tank (11) and/or said cleaning tank (12) for control engineering purposes.

4. The rinsing unit (1) as defined in any one of the claims 2 to 3, wherein said control unit (2) has at least one filling level indicator (25) disposed in said cleaning tank (12), by means of which at least one water level in said cleaning tank (12) can be detected for control engineering purposes.

5. The rinsing unit (1) as defined in any one of claims 2 to 4, wherein the output of said valve (21) communicates with said vent hole (121) and the input of said valve (21) communicates with the atmosphere or with a pressure tank.

6. The rinsing unit (1) as defined in claim 5, wherein a sensor (46) is provided which detects docking of said suction hose (43) to said outlet orifice (122) of said cleaning tank (12) and immediately switches off the overpressure when said suction hose (43) is prematurely removed.

7. The rinsing unit (1) as defined in any one of claims 1 to 6, wherein said cleaning tank (12) is disposed relatively to said water tank (11) above the highest possible filling level of the water in said water tank (11).

8. The rinsing unit (1) as defined in any one of claims 1 to 7, wherein said reservoir (125) and said riser (126) are in the form of a U-shaped pipe or tubing or in the form of a siphon.

9. A system consisting of a rinsing unit (1) as defined in any one of the previous claims and a dental suction apparatus (4), wherein the suction apparatus (4) has at least one suction handpiece (42) connected via a suction hose (43).

10. The system as defined in claim 9, wherein said suction apparatus (4) has a plurality of suction hoses (43) and said rinsing unit (1) a plurality of cleaning tanks (12) and/or a plurality of taps (124) on a cleaning tank (12).

11. A method for cleaning a suction hose (43) of a dental suction apparatus (4) including a rinsing unit (1) as defined in any one of the previous claims, including the following method steps,
a) said water tank (11) is at least partially filled with water;
b) said suction apparatus (4) is switched on;
c) said suction hose (43) is connected to said outlet orifice (122) of said cleaning tank (12) to cause said outlet orifice to take the form of a tap;
d) said vent hole (121) of said cleaning tank (12) is closed;
after which the following steps take place:
e) the negative pressure produced in said cleaning tank (12) by said suction apparatus (4) via said suction hose (43) sucks water from said water tank (11) into said cleaning tank (12);
f) the amount of water flowing into said cleaning tank (12) is controlled by time measurement or with the aid of said level indicator (25) in said cleaning tank (12);
g) after a certain amount of water has flowed into said cleaning tank (12), said valve (21) is opened and the volume of water present in said cleaning tank (12) is sucked in by said suction apparatus (4) and leaves said cleaning tank (12) at least partially impulsively and flows through said suction hose (43).

12. The method as defined in claim 11, wherein the time measurement for opening said valve (21) is initiated by a timer (45) in the control system (22) when said valve (21) is closed.

13. The method as defined in claim 11, wherein said valve (21) is opened when said filling level indicator (25) in said cleaning tank (12) signals that the maximum filling level has been reached.

14. The method as defined in any one of claims 11 to 13, wherein said valve (21) is closed as soon as the rinsing operation is over or a negative pressure is generated in said cleaning tank (12).

15. The method as defined in any one of claims 11 to 14, wherein when said valve (21) is opened, water in the cleaning tank (12) is fed to said suction hose (43) not only by the negative pressure produced at said outlet orifice (122) but also by means of compressed air, said compressed air being introduced via said valve (21).

## Revendications

1. Unité de rinçage dentaire (1), avec au moins un récipient d'eau (11) et avec un récipient de nettoyage (12) pour nettoyer une tubulure d'aspiration (43) d'une pièce à main d'aspiration (42) pour aspirer des liquides et des solides dans la bouche d'un patient, dans laquelle le récipient de nettoyage (12) présente une ouverture d'admission (120) reliée au récipient d'eau (11) ainsi qu'une ouverture d'évacuation (122) pour raccorder la tubulure d'aspiration (43), dans laquelle l'ouverture d'évacuation (122) est réalisée comme une prise d'eau (124) pour la tubulure d'aspiration (43) de la pièce à main d'aspiration (42), et dans laquelle le récipient de nettoyage (12) présente au moins un premier récipient partiel réalisé sous forme de réservoir (125) pour recevoir l'eau et un deuxième récipient partiel adjacent au réservoir (125) et réalisé sous forme de conduite montante (126), dans laquelle l'extrémité ouverte, opposée au réservoir (125), de la conduite montante (126) constitue l'ouverture d'évacuation (122), et dans laquelle une connexion (123) entre le réservoir (125) et la conduite montante (126) est disposée au-dessous d'une ouverture d'aération (121) du récipient de nettoyage (12) et au-dessous de l'ouverture d'évacuation (122).

2. Unité de rinçage (1) selon la revendication 1, dans laquelle au moins une vanne (21) est disposée à l'ouverture d'aération (121), dans laquelle ladite vanne (21) peut être ouverte, fermée ou réglée manuellement et/ou automatiquement à l'aide d'une commande (22) d'une unité de commande (2) en fonction d'au moins une grandeur physique.

3. Unité de rinçage (1) selon la revendication 2, dans laquelle l'unité de commande (2) coopère avec au moins un capteur de pression (24) par lequel il est possible de détecter par une technique de commande un vide à l'intérieur du récipient d'eau (11) et/ou du récipient de nettoyage (12).

4. Unité de rinçage (1) selon l'une quelconque des revendications 2 ou 3, dans laquelle l'unité de commande (2) présente au moins un indicateur de niveau (25) disposé sur le récipient de nettoyage (12) et permettant de détecter par une technique de commande au moins un niveau de remplissage de l'eau à l'intérieur du récipient de nettoyage (12).

5. Unité de rinçage (1) selon l'une quelconque des revendications 2 à 4, dans laquelle la sortie de la vanne (21) est reliée à l'ouverture d'aération (121) et en ce que l'entrée de la vanne (21) est reliée à l'atmosphère ou à un récipient sous pression.

6. Unité de rinçage (1) selon la revendication 5, dans laquelle un capteur (46) est prévu qui détermine le raccordement de la tubulure d'aspiration (43) à l'ouverture d'évacuation (122) du récipient de nettoyage (12), et coupe immédiatement la surpression en cas de retrait prématuré de la tubulure d'aspiration (43).

7. Unité de rinçage (1) selon l'une quelconque des revendications 1 à 6, dans laquelle le récipient de nettoyage (12) est disposé par rapport au récipient d'eau (11) au-dessus du niveau de remplissage le plus haut possible pour l'eau dans le récipient d'eau (11).

8. Unité de rinçage (1) selon l'une quelconque des revendications 1 à 7, dans laquelle le réservoir (125) et la conduite montante (126) sont réalisés sous la forme d'un tuyau en forme de U, d'une section de tuyau souple ou de siphon.

9. Système composé d'une unité de rinçage (1) selon l'une quelconque des revendications précédentes et d'un équipement d'aspiration dentaire (4), dans lequel l'équipement d'aspiration (4) présente au moins une pièce à main d'aspiration (42) raccordée par l'intermédiaire d'une tubulure d'aspiration (43).

10. Système selon la revendication 9, dans lequel l'équipement d'aspiration (4) présente plusieurs tubulures d'aspiration (43) et l'unité de rinçage (1) présente plusieurs récipients de nettoyage (12) et/ou plusieurs prises d'eau (124) sur un récipient de nettoyage (12).

11. Procédé de rinçage d'une tubulure d'aspiration (43) d'une pièce à main d'aspiration (42) d'un équipement d'aspiration dentaire (4), avec une unité de rinçage (1) selon l'une quelconque des revendications précédentes, comprenant les étapes de procédé suivantes :
a) le récipient d'eau (11) est au moins partiellement rempli d'eau ;
b) l'équipement d'aspiration (4) est activé
c) la tubulure d'aspiration (43) est raccordée à une ouverture d'évacuation (122) du récipient de nettoyage (12), l'ouverture d'évacuation (122) étant réalisée sous forme de prise d'eau ;
d) l'ouverture d'aération (121) du récipient de nettoyage (12) est fermée ;
ensuite la séquence est la suivante :
e) le vide généré par l'équipement d'aspiration (4) par l'intermédiaire de la tubulure d'aspiration (43) dans le récipient de nettoyage (12) aspire l'eau du récipient d'eau (11) dans le récipient de nettoyage (12) ;
f) la quantité de l'eau passant dans le récipient de nettoyage (12) est commandée par chronométrage ou à l'aide du dispositif de mesure de niveau (25) dans le récipient de nettoyage (12) ;
g) après écoulement d'une certaine quantité d'eau dans le récipient de nettoyage (12), la vanne (21) est ouverte et la quantité d'eau se trouvant à l'intérieur du récipient de nettoyage (12) est aspirée par l'équipement d'aspiration (4) et sort au moins en partie par impulsions du récipient de nettoyage (12) tout en passant par la tubulure d'aspiration (43).

12. Procédé selon la revendication 11, dans lequel le chronométrage pour l'ouverture de la vanne (21) est démarré par un temporisateur (45) de la commande (22) après fermeture de la vanne (21).

13. Procédé selon la revendication 11, dans lequel la vanne (21) est ouverte après que l'indicateur de niveau (25) a signalé le niveau de remplissage maximum dans le récipient de nettoyage (12).

14. Procédé selon l'une quelconque des revendications 11 à 13, dans lequel la vanne (21) est fermée immédiatement après l'opération de rinçage ou après génération du vide dans le récipient de nettoyage (12).

15. Procédé selon l'une quelconque des revendications 11 à 14, dans lequel, après ouverture de la vanne (21), l'eau du récipient de nettoyage (12) est acheminée à l'aide d'air comprimé dans la tubulure d'aspiration (43), en plus du vide généré au niveau de l'ouverture d'évacuation (122), l'air comprimé étant introduit par la vanne (21).
